# FASCICULE DE BREVET EUROPEEN

(11) **EP 1 058 800 B1**
(45) Date de publication et mention de la délivrance du brevet: **01.06.2005**
(21) Numéro de dépôt: 99964746.4
(22) Date de dépôt: 30.12.1999
(51) Int. Cl.: F16L 53/00, F16L 59/14

(54) **DISPOSITIF ET PROCEDE THERMIQUE D'ISOLATION D'AU MOINS UNE CONDUITE SOUS-MARINE A GRANDE PROFONDEUR**
VERFAHREN UND VORRICHTUNG ZUM THERMISCHEN ISOLIEREN EINER UNTERWASSERLEITUNG FÜR GROSSE TIEFEN
HEAT INSULATING DEVICE AND METHOD FOR INSULATING AT LEAST A SUBMARINE PIPELINE AT GREAT DEPTH

(30) Priorité: 31.12.1998 FR 9816791; 26.01.1999 FR 9900985
(43) Date de publication de la demande: 13.12.2000
(73) Titulaire: SAIPEM S.A., 78180 Montigny-le-Bretonneux (FR)
(72) Inventeur: BAYLOT, Michel, F-13008 Marseille (FR); HALLOT, Raymond, F-13600 La Ciotat (FR); PIONETTI, Régis, F-75017 Paris (FR); ROCHER, Xavier, F-78400 Chatou (FR)
(74) Mandataire: Domange, Maxime
(86) Numéro de dépôt international: PCT/FR1999/003322
(87) Numéro de publication internationale: WO 2000/040886

(56) Documents cités:
- FR-A- 2 400 088
- GB-A- 2 281 373
- US-A- 3 768 547

## Description

La présente invention a pour objet des dispositifs et procédés d'isolation thermique d'au moins une conduite sous-marine à grande profondeur.

Le secteur technique de l'invention est le domaine de la fabrication et du montage de système d'isolation à l'extérieur et autour des conduits dans lesquels circulent des effluents chauds dont on veut limiter les déperditions de chaleur.

Cette invention s'applique plus particulièrement aux développements de champs pétroliers en mer profonde, c'est à dire des installations pétrolières installées en pleine mer, dans lesquelles les équipements de surface sont en général situés sur des structures flottantes, les têtes de puits étant au fond de la mer. Les conduites concernées par la présente invention étant soit des liaisons entre têtes de puits, soit la partie reposant sur le fond des liaisons fond surface.

Les développements en mer profonde sont effectués par des profondeurs d'eau atteignant actuellement 1500 m. Les développements futurs sont envisagés par des profondeurs d'eau jusqu'à 3000m et au-delà.

L'application principale de l'invention est l'isolation thermique de conduites ou canalisations immergées, sous-marines ou subaquatiques, et plus particulièrement à grande profondeur au-delà de 300 mètres, et véhiculant des produits pétroliers chauds dont un trop grand refroidissement serait problématique aussi bien en régime de production normale qu'en cas d'arrêt de production.

En effet dans ce type d'applications, de nombreux problèmes se posent si la température des produits pétroliers diminue d'une valeur significative importante par rapport à leur température de production qui est en général au-delà de 60 à 80°C alors que la température de l'eau environnante surtout à grande profondeur peut être inférieure à 10°C. Si les produits pétroliers se refroidissent par exemple en dessous de 30° à 60°C pour une température initiale de 70 à 80°C on observe en général :
- une forte augmentation de la viscosité qui diminue alors le débit de la conduite,
- une précipitation de paraffine dissoute qui augmente alors la viscosité du produit et dont le dépôt peut diminuer le diamètre intérieur utile de la conduite,
- la floculation des alphaltènes induisant les mêmes problèmes,
- la formation soudaine, compacte et massive d'hydrates de gaz qui précipitent à forte pression et faible température, obstruant ainsi brusquement la conduite.

Paraffines et alphaltènes restent accrochés à la paroi et nécessitent alors un nettoyage par raclage de l'intérieur de la conduite ; par contre les hydrates sont encore plus difficile voire même impossible à enlever.

L'isolation thermique de telles conduites a donc pour fonction de retarder le refroidissement des effluents pétroliers véhiculés non seulement en régime de production établi pour que leur température soit par exemple d'au moins 40°C en arrivant en surface, pour une température de production à l'entrée de la conduite de 70°C à 80°C mais également en cas de diminution ou même d'arrêt de la production afin d'éviter que la température des effluents descendent par exemple en dessous de 30°C afin de limiter les problèmes ci-dessus ou tout au moins de permettre de les rendre réversibles.

Quand, de plus, de telles conduites doivent être posées de plus à des profondeurs supérieures à 300 mètres la pression ambiante d'au moins 30 bars interdit l'emploi des calorifuges performants que l'on rencontre à terre ou à faible immersion, car ils utilisent tous des gaz dont la conductivité thermique est en effet très faible et dont la convection est bloquée par un matériau solide poreux, cellulaire ou fibreux : la compressivité des gaz ne permet pas cependant à ces calorifuges classiques de supporter des pressions extérieures élevées.

On pourrait également citer la demande de brevet japonaise publiée le 25/10/91 n° JP2176299 qui décrit un dispositif d'isolation pour tube en métal ou en résine synthétique pour la fourniture d'eau chaude dans des bâtiments et dont on veut conserver la température à plus de 50°C après une heure d'arrêt de fourniture en eau chaude, dans une température ambiante de 13°C par exempte : il est décrit pour cela une structure comprenant le tube de circulation de l'eau chaude, qui est de préférence déformable pour en faciliter la pose, avec une couche de matériau poreux imbibée à 200 % environ de paraffine et le recouvrant, et une autre couche en matière réfractaire couvrant la périphérie de l'ensemble ; l'utilisation de la paraffine permet d'avoir un coefficient d'isolation thermique intéressant bien que plus faible que les calorifuges cités ci-dessus et comportant du gaz, mais la capacité d'accumulation thermique de ce dispositif japonais est renforcée par la présence de la couche réfractaire extérieure permettant de réduire la perte thermique avec l'avantage de pouvoir couper l'ensemble de cette structure en n'importe quel endroit pour en faciliter le montage et sans perte du pouvoir d'accumulation thermique. Une telle solution n'est cependant pas utilisable dans de l'eau surtout à grande profondeur où il faut pouvoir résister à une pression hydrostatique extérieure importante, tout en assurant un confinement suffisant pour éviter tout risque de pollution et/ou de perte d'efficacité thermique. De plus, elle n'apporte pas les caractéristiques spécifiques décrites et revendiquées dans la présente invention.

Du reste, il a été plutôt développé d'autres types d'isolation thermique spécifiques et compatibles avec de fortes immersions et que l'on peut regrouper en trois familles, à savoir :
- les revêtements extérieurs en plastique massif tel qu'en polyuréthanne, polyéthylène, polypropylène... mais dont la conductivité thermique est assez moyenne puisque de l'ordre de 0,2 à 0,3 Watt/mêtre/degré Celsius, ce qui peut être suffisant en fonctionnement continu de production mais insuffisant pour préserver une température minimum pendant un temps donné en cas d'arrêt de production,
- les revêtements en matériaux syntactiques constitués de billes creuses contenant un gaz et résistantes à la pression extérieure et noyées dans des liants variés tels que béton, époxy, élastomère, polypropylène etc... : les plus performants sont les matériaux syntactiques à base de liant époxy et de microsphères de verre creuses de conductibilité assez faible et intéressante puisque de l'ordre de 0,10 à 0,15 watt/mètre/degré Celsius mais le prix de ces revêtements est très élevé,
- les « pipe en pipe » dans lesquels un premier tube intérieur véhiculant les effluents est disposé concentriquement dans un deuxième tube résistant à la pression hydrostatique extérieure ; l'espace annulaire compris entre les deux tubes peut être, soit rempli de calorifuge à très faible conductivité thermique (0,02 Watt/mètre/degré Celsius) et qui pour ne pas s'écraser doit être laissé à pression atmosphérique, soit mis sous vide : une telle solution nécessite des cloisons disposées longitudinalement et parfaitement étanches, à intervalles réguliers, pour des questions de sécurité, et complique la construction et la mise en place de tels ensembles qui sont de plus très coûteux.

Une autre technique consiste à préfabriquer des coquilles en mousse syntactique et à les assembler autour de la conduite ou encore à réaliser un enrobage continu de mousse syntactique autour de ladite conduite. Nous rappelons à ce sujet que la mousse syntactique est constituée de microsphères creuses contenant un gaz et liées par une résine en général du type époxy.

Ces technologies d'isolation pour les grands fonds utilisent des produits de très hautes performances extrêmement coúteux et difficiles à mettre en oeuvre sur une échelle importante.

Dans le cas de l'installation de conduites uniques ou de faisceaux de conduites (appelées "bundles"), on préfère en général préfabriquer les dites conduites à terre en longueurs unitaires de 500 à 1000 m que l'on tire ensuite depuis le large à l'aide d'un remorqueur. Dans le cas de conduites de plusieurs kilomètres, on tire la première longueur que l'on raboute à la suivante, le remorqueur maintenant l'ensemble en traction pendant la phase de raboutage, laquelle peut durer plusieurs heures. Lorsque l'intégralité de la conduite ou du faisceau de conduites a été mise à l'eau, l'ensemble est remorqué, frottant en général sur le fond, vers le site, où il est alors mis en place.

L'isolation de la ou des conduites ou du "bundle" est alors protégée par une enveloppe extérieure qui a une double fonction : - d'une part d'éviter les endommagements qui pourraient se produire lors du remorquage, lequel peut dans certains cas se faire sur des distances de plusieurs centaines de kilomètres ce qui nécessite d'utiliser des matériaux assez résistant tels qu'en acier, en composé thermoplastique ou thermodurcissable ou encore en matériau composite ; - d'autre part de créer un confinement autour du système d'isolation.

Ce confinement est nécessaire dans le cas de revêtements extérieurs isolant constitués de coquilles de mousse syntactique assemblées autour des conduites, car les interstices existant entre les diverses coquilles, ainsi que l'espace entre les coquilles et l'enveloppe externe sont remplis d'un produit quasiment incompressible, lequel est en général de l'eau douce ou de l'eau de mer passivée, ou encore tout autre produit compatible avec les composants internes.

En effet, par des fonds de 2000 m, la pression hydrostatique est de l'ordre de 200 bars, soit 20 Méga Pascals, ce qui implique que l'ensemble des conduites et de son système isolant doit être capable de résister non seulement à ces pressions sans dégradation lors des pressurisations et dépressurisations de la conduite dans laquelle circule le fluide chaud, mais encore aux cycles de température lesquels engendreront des variations de volume des différents composants ainsi que des fluides interstitiels, et donc de pression positives ou négatives pouvant conduire si 'l'enveloppe externe est étanche à sa destruction partielle ou totale soit par dépassement des contraintes admissibles, soit par implosion de cette enveloppe externe (variations de pression interne négatives).

Si ladite enveloppe externe n'est pas étanche, l'ensemble sera alors en équipression par rapport à la pression extérieure, mais il en résultera alors des échanges de fluides entre l'intérieur du "bundle" et le milieu extérieur. Dans le cas d'un remplissage des interstices du "bundle" à l'ear douce, à l'eau de mer passivée, ou encore tout autre produit compatible avec les composants internes comme indiqué ci-dessus, du fait que l'on cherche alors à éviter les échanges de fluide avec le milieu extérieur, on est amené à disposer des poches constituées d'une membrane souple de type élastomère permettant de contenir les variations de volume en maintenant les variations de pression à un niveau raisonnable mais ces poches compliquent alors l'assemblage du dispositif isolant et ne permettent pas de répartir les contraintes d'une manière uniforme.

Dans GB 2 247 507, il est décrit un système d'isolation de conduite sous-marine dans lequel ladite conduite est entourée par un matériau retenant la chaleur choisi parmi différents matériaux, notamment l'eau de mer, de la cire, du bitume ou un gel thixotropique, ledit matériau retenant la chaleur étant recouvert d'un matériau isolant, notamment un matériau rigide tel que du béton.

US 3 768 547 décrit un ensemble avec toutes les caractéristiques du préambule de la revendication 1.

Le problème posé est donc de pouvoir réaliser une isolation d'au moins une conduite sous marine destinée à être posée sur le fond en particulier à grande profondeur, dont le revêtement isolant puisse résister non seulement à la pression hydrostatique mais également à tous les efforts liés à son poids propre, et induits lors de la pose au cours de laquelle la conduite subit des frottements et est exposée à des risques de poinçonnage ; ledit revêtement isolant doit permettre de maintenir par exemple un effluent chaud tel qu'un produit pétrolier produit à, par exemple 60°C au niveau du fond à une température au-dessus de, par exemple 40°C quand il arrive en surface après un parcours de plusieurs kilomètres dans l'eau, et de plus maintenir une température à plus de, par exemple 30°C même après plusieurs heures d'arrêt de production, et cela avec un coût de fabrication qui soit inférieur à celui des matériaux syntactiques actuels tout en offrant diverses possibilités de mise en oeuvre, et cela sans risque de pollution pour l'environnement.
Une solution au problème posé est un dispositif d'isolation d'au moins une conduite sous marine (qui peut être en effet seule ou assemblée avec d'autres conduites, constituant alors ce que l'on appelle des « bundles » ou des « faisceaux »), destinée à être posée sur le fond à grande profondeur, comportant un revêtement isolant entourant celle-ci et une enveloppe de protection ; selon l'invention ledit revêtement isolant comprend un matériau quasi incompressible à changement de phase liquide-solide à une température de fusion T₀ supérieure à celle T₂ du milieu environnant la conduite en opération et inférieure à celle T₁ des effluents circulant dans la conduite, laquelle enveloppe de protection est résistante (tel qu'à l'abrasion, aux frottements, à la corrosion et aux impacts mécaniques) et déformable (notamment pour suivre les variations de volume du matériau à changement de phase sous l'effet de la pression hydrostatique et/ou lors des variations de températures), assure un confinement autour dudit revêtement isolant, notamment un confinement autour et contre dudit revêtement isolant.

De préférence, ledit revêtement isolant comprend une matrice absorbante entourant la conduite, de préférence au plus près de la surface extérieure de ladite conduite, ladite matrice étant imprégnée dudit matériau quasi-incompressible.

Ledit revêtement isolant peut entourer directement la conduite, ou indirectement. Dans ce dernier cas ledit revêtement isolant peut entrourer une conduite elle-même déjà isolée, notamment par de la mousse syntactique.

L'enveloppe de protection, s'appuyant sur le matériau solidifié et rigide au moins à sa périphérie, est apte à supporter le poids de la conduite et les frottements lors de la pose de celle ci depuis la surface.

Plus particulièrement, l'enveloppe de protection est déformable pour suivre les variations de volume du revêtement isolant sous l'effet de la pression hydrostatique et lors des variations de température.

Cette enveloppe peut présenter au moins un évent perméable au gaz de manière à éviter les éventuelles accumulations de gaz tel que l'hydrogène avant pu diffuser à travers la paroi de la conduite interne, lequel hydrogène peut être engendré par les effluents qui y circulent.

L'objectif de la présente invention est également atteint par un procédé d'isolation utilisant un revêtement isolant entourant au moins une conduite sous-marine et une enveloppe de protection, tel que :
- on entoure ladite conduite, de préférence directement, avec un revêtement isolant comprenant un matériau quasi incompressible et à changement de phase liquide-solide à une température de fusion T₀ donnée, ledit matériau incompressible étant de préférence imprégné dans une matrice absorbante, et on confine l'ensemble dans l'enveloppe de protection qui doit être résistante et déformable,
- on fait circuler dans ladite conduite des effluents chauds à une température T₁ supérieure à la température de fusion T₀ du matériau alors que la température T₂ ambiante extérieure est inférieure à T₀, le matériau à changement de phase étant alors liquéfiée, de préférence dans une partie de la matrice d'imprégnation depuis la conduite jusqu'à une limite d'équilibre d'échange thermique entre la conduite et l'enveloppe, au-delà de cette limite le matériau étant solide,
- quand on arrête la circulation des effluents dans la conduite on maintient la température de ces effluents est maintenue au-dessus d'une température T₃ donnée pendant une durée prédéterminée grâce au transfert calorifique apporté par la chaleur latente de solidification du matériau dont la partie liquide se solidifie progressivement en se refroidissant.

Le résultat est un nouveau dispositif et procédé d'isolation d'au moins une conduite sous-marine destinée à être posée sur le fond en particulier à grandes profondeurs, évitant les inconvénients cités précédemment dans les dispositifs actuels et répondant au problème posé. En effet, l'enveloppe de protection extérieure n'a pas besoin d'être résistante à la pression hydrostatique puisqu'elle s'appuie sur un matériau quasi incompressible.

De tels matériaux sont choisis pour être également à changement de phase liquide/solide à une température de fusion T₀ supérieure à celle T₂ du milieu environnant la conduite en opération afin que sa partie extérieure soit toujours solide, et donc d'une part assez résistante pour absorber les efforts transmis par l'enveloppe de protection extérieure, d'autre part apportant une meilleure inertie thermique. Ladite température de fusion T₀ doit être également choisie pour être inférieure à celle de l'effluent circulant dans la conduite, de telle façon que la partie de ce matériau entourant la conduite soit liquéfiée grâce à l'apport calorifique des effluents en régime de production normale. En revanche, en cas de ralentissement de la production ou même en cas d'arrêt, de celle-ci, ledit matériau à changement de phase restitue ses calories aux effluents contenus dans la conduite, grâce par exemple à une enthalpie de fusion supérieure à 50 kilojoule/kilogramme, ce qui retarde d'autant plus le refroidissement desdits effluents et permet d'atteindre les objectifs recherchés.

De plus, la partie solide extérieure dudit matériau à changement de phase limite les risques de pollution de ce matériau dans le milieu environnant puisqu'en cas de déchirure de l'enveloppe de protection extérieure, la solidité de cette partie du matériau maintient son intégrité.

Ledit matériau quasi-incompressible est choisi pour sa faible conductivité thermique, notamment inférieure à 0,3 watt/mètre/degré Celsius.

Ledit matériau incompressible est choisi notamment parmi les matériaux constitués d'au moins 90 % de composés chimiques choisis parmi les alcanes, notamment comprenant une chaîne hydrocarbonée d'au moins 10 atomes de carbone, ou encore les sels hydratés ou pas, les glycols, les bitumes, les goudrons, les cires, et autres corps gras solides à température ambiante, tels que le suif, la margarine ou les alcools gras et acides gras.

De préférence, le matériau incompressible est constitué de paraffine comprenant une chaîne hydrocarbonée d'au moins 14 atomes de carbone.

Les matériaux à changement de phase décrits précédemment présentent généralement une variation volumique importante lors de leur changement d'état, pouvant atteindre 20 % dans le cas des paraffines. L'enveloppe extérieure de protection doit pouvoir s'accommoder sans dommage de ces variations de volume.

Un autre objectif de la présente invention est donc aussi de réaliser une enveloppe de protection du système d'isolation permettant, d'une part d'assurer l'intégrité d'un faisceau de conduites et de son système d'isolation lors de son remorquage et de son installation sur site et, d'autre part de s'affranchir des contraintes engendrées par la dilatation différentielle des divers composants lors des variations de température, associées aux contraintes dues à la pression du fond de la mer.

Cet objectif est atteint par un dispositif d'isolation thermique d'au moins une conduite sous marine comportant un revêtement isolant entourant celle ci et une enveloppe de protection tel que suivant la présente invention, le périmètre extérieur de la section transversale de ladite enveloppe de protection est une courbe fermée dont le rapport du carré de la longueur sur la surface qu'elle délimite est au moins égal à 13 ; l'enveloppe de protection, qui entoure et assure le confinement du revêtement isolant, épouse la forme extérieure de celui ci, et sa section transversale qui n'est donc pas circulaire - comme il est d'usage de le faire jusqu'à ce jour - est un ovale, un polygone tel qu'un rectangle, ou encore une combinaison des deux.

Dans le cas où le dispositif comporte au moins deux conduites disposées suivant un même plan, la section transversale de ladite enveloppe est de forme allongée dans la même direction que ce plan.

Lors des variations de volume interne, l'enveloppe aura tendance à se déformer vers une forme circulaire, laquelle constitue mathématiquement la forme présentant, à périmètre constant, la section la plus importante.

Dans le cas d'une enveloppe étanche à profil circulaire, une augmentation de volume engendre des contraintes dans la paroi, lesquelles sont liées à l'augmentation de pression résultante de cette augmentation de volume.

Par contre dans le cas d'un profil rectangulaire une augmentation de volume engendrera principalement des flexions des parois planes, la migration des fluides interstitiels se regroupant dans ces zones de déformation. Les efforts engendrés dans la paroi seront principalement des efforts de flexion dans l'épaisseur de la paroi, les fléchissements les plus importants se produisant sur les grands côtés, dans la mesure où l'enveloppe présente une épaisseur constante sur son pourtour et sur toute sa longueur.

A titre d'exemple, un cercle de diamètre 1 m possède une section approchée de 0,785 m² pour un périmètre approché de 3,1416 m : un carré de même périmètre présentant une section approchée de 0,617 m², cette forme offre une capacité d'expansion de 21,5% lorsque l'on passe, à périmètre constant, d'une forme carrée à une forme circulaire ; cette forme carrée correspond à une valeur du rapport du carré de la longueur de son périmètre extérieur de la courbe fermée de la section transversale de l'enveloppe de protection sur la surface que délimite ledit périmètre, égal à 16.

De même, une forme rectangulaire aplatie dont le rapport ci dessus est alors supérieur à 16 présentera, à périmètre constant, une plus grande capacité théorique d'expansion ; ainsi, un rectangle de 1,2 m de grand côté et de 0,3708 m de petit côté qui a le même périmètre de 3,1416 m, mais une section de seulement 0,44496 m², présente une capacité théorique d'expansion de 43,3%.

Il apparaît ainsi que plus on aplatit la forme de la section transversal du revètement isolant, meilleure est la capacité de son enveloppe à absorber les expansions dues à la dilatation des composants sous l'effet de la température.

Il ne faut cependant pas perdre de vue que l'on ne dispose pas de l'intégralité de la capacité théorique d'expansion car la déformation par flexion de la paroi tendra vers la forme d'un cercle très imparfait. Ainsi la capacité effective d'expansion n'est qu'une portion de ladite capacité théorique d'expansion et peut alors correspondre à 30% ou 50% selon la qualité du matériau constituant l'enveloppe, laquelle enveloppe peut être en acier, en composé thermoplastique ou thermodurcissable ou encore en matériau composite.

Ainsi, pour d'importantes variations de volumes, on utilisera avantageusement des profils dont le périmètre de la section transversal de ladite enveloppe extérieure comporte des contre courbures concaves dont la concavité est tournée vers l'extérieur de ladite enveloppe.

Dans le cas de profil de forme ovale, une variation de pression interne impliquera une combinaison de contraintes de flexion et de contraintes de traction pure, car la courbure variable de l'ovale se comporte alors comme une voûte architecturale avec cependant la différence que dans le cas de notre enveloppe, les contraintes sont des contraintes de traction et non des contraintes de compression. Ainsi, une forme ovale ou approchée d'une ovale sera envisageable pour de faibles capacités d'expansion et il conviendra de considérer alors des ovales avec un rapport de longueur du grand axe ρₘₐₓ sur celle du petit axe ρₘᵢₙ aussi élevé que possible par exemple au moins 2/1 ou 3/1.

On sélectionnera alors la forme de l'enveloppe en fonction de l'expansion globale recherchée du volume du revêtement isolant, sous l'effet de variations de température. Ainsi, pour un système d'isolation utilisant principalement des matériaux sujets à expansion, une forme rectangulaire, une forme polygonale ou encore une forme ovale permettent une expansion par flexion de la paroi tout en induisant un minimum de contraintes de traction dans l'enveloppe extérieure.

Pour un fluide présentant une grande expansion sous l'effet de variations de température, tel que du gazole, des produits de la famille des alcanes (paraffines), ou encore des matériaux à changement de phase, on aplatira avantageusement le rectangle pour créer la réserve d'expansion nécessaire. On peut encore augmenter cette réserve d'expansion en créant les contre-courbures précédemment mentionnées.

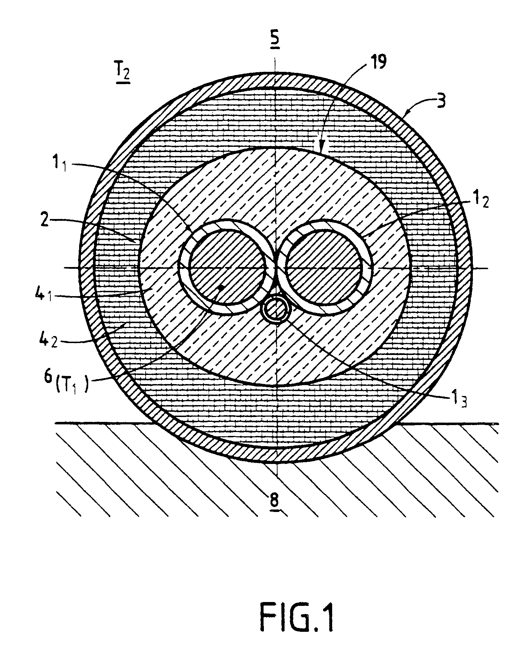

On pourrait citer d'autres avantages à la présente invention mais ceux cités ci-dessus en montrent déjà suffisamment pour en prouver la nouveauté et l'intérêt. La description des figures ci-après concerne des exemples de réalisation de l'invention mais n'a aucun caractère limitatif : d'autres réalisations sont possibles dans le cadre de la portée et de l'étendue de cette invention, en particulier en choisissant un matériau à changement de phase liquide/solide spécifique aux applications souhaités en terme de profondeur d'immersion, de température du milieu environnant, de température des effluents...
Le figure 1 est une vue en coupe d'un dispositif d'isolation suivant la présente invention représenté ici avec trois conduites rassemblées en faisceau ou « bundle » mais qui peut être adapté à une seule conduite ou à un nombre supérieur de conduites réunies.
Les figures 2A et 2B représentent des détails des phases du procédé de montage et de fabrication du dispositif d'isolation selon l'invention tel que représenté sur la figure 3E.
Les figures 3A à 3E et 4A à 4C représentent différentes phases d'un exemple de procédé d'isolation suivant la présente invention.
Les figures 5A et 5B représentent des coupes d'un dispositif selon l'invention spécifique au raccordement entre deux tronçons de conduite.
La figure 6 est une vue en coupe d'un faisceau de deux conduites ou "bundle" dont le revêtement isolant et l'enveloppe de protection sont de forme circulaire et constituent l'art antérieur connu.
La figure 7 est une vue en coupe d'une enveloppe de faisceau de conduites selon l'invention, de section carrée,
La figure 8 est une vue en coupe d'une enveloppe de section polygonale.
La figure 9 est une vue en coupe d'une enveloppe de section rectangulaire aplatie à la température ambiante et en position d'expansion maximale due à la température.
La figure 10 est une vue en coupe d'une enveloppe de section ovale de rapport 3/1.
la figure 11 est une vue en coupe d'une enveloppe de section ovale de rapport 2/1.
La figure 12 est une vue en coupe d'une enveloppe de section rectangulaire aplatie avec les extrémités arrondies.
La figure 13 est une vue en coupe d'une enveloppe de section courbe présentant des points d'inflexion, donc des contre courbures.
La figure 14 est une vue en coupe d'un faisceau constitué d'une multiplicité de conduites, de câbles de puissance et de contrôle, disposés à plat suivant la présente invention, isolés par un revêtement isolant et protégés par une enveloppe de protection de section sensiblement rectangulaire et aplatie, et comportant une plaque d'usure inférieure.
La figure 15 est une vue en coupe d'un "bundle" selon l'invention de section sensiblement rectangulaire et aplatie, fabriqué à partir de plaques métalliques et présentant un couvercle soudé.
La figure 16 est une vue en coupe d'une variante du "bundle" précédent dans laquelle le couvercle peut être soit soudé, soit assemblé mécaniquement.
La figure 17 est une vue en coupe d'une variante du bundle précédent dans laquelle le couvercle est remplacé par un produit souple et résistant coulé en place.

### Exemple 1 : Revêtement isolant à base de paraffine.

Comme indiqué précédemment, le dispositif d'isolation d'au moins une conduite sous-marine 1 destinée à être posée sur le fond 8 de la mer à grande profondeur, comporte d'une manière connue un revêtement isolant entourant celle ci et une enveloppe de protection 3. Suivant la présente invention tel que représenté sur les figures jointes, ledit revêtement isolant est composé d'un matériau quasi incompressible 4 à changement de phase liquide-solide à une température de fusion T₀ supérieur à celle T₂ du milieu environnant la conduite en opération et inférieure à celle T₁ des effluents 6 circulant dans la conduite 1 ; lequel matériau 4 a une conductivité thermique assez faible de préférence inférieure à 0,3 watt/métre/degré Celsius en phase solide et une enthalpie de fusion de préférence supérieure à 50 kilojoules/kilogramme : il est par exemple constitué d'au moins 90 % de composés chimiques de la famille des alcanes qui sont des hydrocarbures saturés de formule générale Cₙ H₂ₙ₊₂ tels que par exemple des paraffines ou des cires ; lesdits composés chimiques pouvant être aussi des sels hydratés ou non, des glycols, des bitumes, des goudrons, des alcools gras ; la température de fusion dudit matériau doit donc être comprise entre les températures T₁ des effluents 6 chauds circulant dans la conduite 1 et T₂ du milieu environnant 5 la conduite en opération, soit en fait en général une température de fusion comprise entre 20 et 80°C. On utilise par exemple comme paraffine du tetracosane de formule C₂₄ H₅₀ présentant une température T₀ de 50,9°C.

Le revêtement isolant selon l'invention est constitué d'une matrice 2 absorbante entourant la conduite 1 au plus prés de sa surface extérieure et imprégnée dudit matériau incompressible 4 ; ladite enveloppe de protection 3 est résistante et déformable et assure un confinement contre et autour dudit revêtement isolant : cette enveloppe de protection 3, s'appuyant sur le matériau 4 solidifié et rigide au moins en périphérie, est apte à supporter le poids de la conduite 1 et les frottements lors de la pose de celle-ci depuis la surface.

Ladite enveloppe de protection 3 est déformable pour compenser au moins les variations de volume du revêtement isolant qu'elle confine, d'une part sous l'effet de la pression hydrostatique et d'autre part lors des variations de volume du matériau 4 lors de son changement de phase, afin de préserver son intégrité et donc sa capacité de confinement ; cette enveloppe de protection 3 peut être pour cela en matériau thermo plastique tel qu'en polyéthylène ou en matériau thermodurcissable, ou même métallique de section non cylindrique. Sous l'action de la pression extérieure hydrostatique, cette enveloppe de protection 3, formant un tube extérieur se déforme et vient prendre appui sur la partie solidifiée du matériau 4 qui est de nature quasiment incompressible : ainsi la déformation de cette enveloppe de protection 3 reste faible et les contraintes qui en résultent seront-elles aussi faibles ; en conséquence l'épaisseur de ladite enveloppe peut également être faible.

Ladite matrice 2 peut être constituée d'un matériau léger cellulaire ou fibreux tel que de la mousse à cellules ouvertes, notamment de la mousse de polyuréthane, de la fibre de verre ou de roche, du tissus, du feutre, du papier etc... : en fait la nature du matériau constituant ladite matrice doit être suffisamment absorbante pour être compatible avec l'imprégnation par ledit matériau 4 à changement de phase afin de s'opposer à la convection naturelle de la partie liquéfiée 4₁ dudit matériau ; cette matrice peut être éventuellement hétérogène pour être compatible avec le gradient de température de l'imprégnation et elle peut n'occuper qu'une partie du volume de l'espace annulaire délimité par ladite enveloppe de protection 3 et ladite conduite 1 dans la mesure où la partie extérieure 4₂ dudit matériau à changement de phase reste toujours solide et n'est donc pas sujet à des mouvements de convection thermique : en ce cas la limite 19 entre les deux parties liquide 4₁ et solide 4₂ est toujours comprise dans la matrice 2.

On utilise par exemple une matrice absorbante constituée par de la moquette aiguilletée.

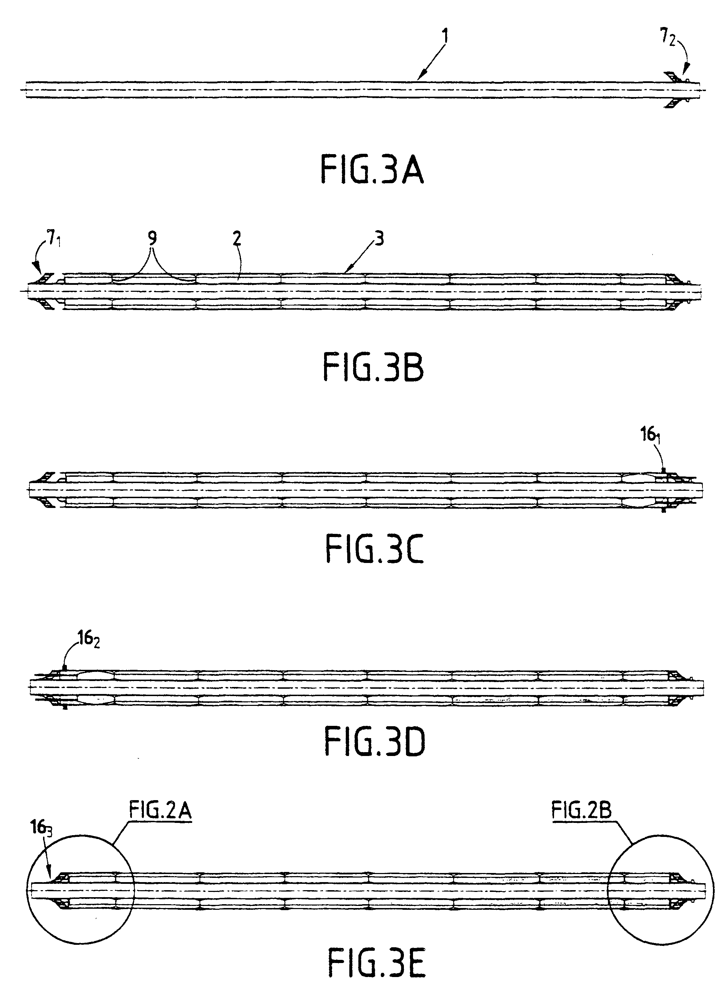

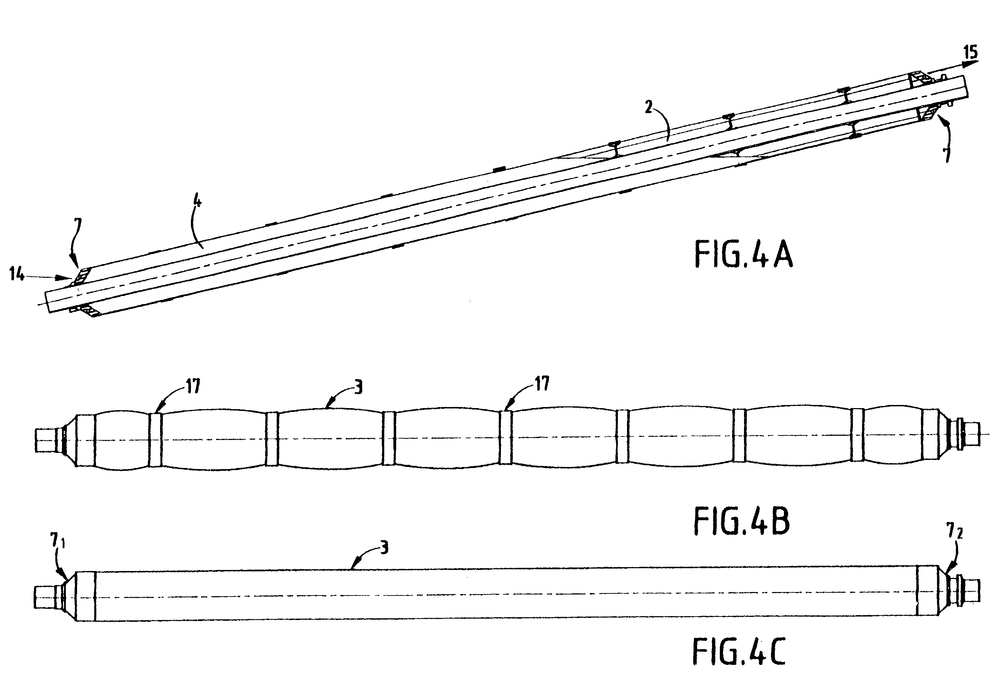

Suivant l'exemple d'un procédé de réalisation d'un dispositif selon l'invention tel que représenté sur les figures 3A à 4C :
- on fixe, tel que par soudage 16₁ d'une manière continue, un obturateur 7₂ à une extrémité de la paroi extérieure de conduite 1 à isoler (figure 3),
- on monte sur cette partie de conduite 1 des éléments de la matrice 2 absorbante qui entoure celle-ci complètement et uniformément et on enfile autour de ces éléments de matrice 2 l'enveloppe extérieure de protection 3 que l'on solidarise, tel que par soudage d'une manière continue, à son extrémité à l'obturateur 7₂ (figures 3B et 3C) ; suivant un mode préférentiel de réalisation on intercale également entre des éléments de matrice 2 absorbante, des entretoises 9 régulièrement espacées le long de la conduite 1 sur laquelle elles s'appuient et aptes à centrer et supporter l'enveloppe de protection 3,
- on positionne à l'autre extrémité de l'enveloppe de protection 3 un deuxième obturateur 7₁ que l'on fixe sur cette enveloppe et sur la conduite 1 tel que pas soudage 16₂ d'une manière continue (figure 3D),
- dans le cas où on a intercalé des entretoises 9 entre les éléments de matrice 2, lorsque l'ensemble des éléments de l'enveloppe de protection 3 ont été ainsi mis en place et fixés pour constituer ainsi l'enveloppe de confinement, on met en place des sangles 17 de maintien à l'aplomb desdites entretoises 9 (figure 4B),
- on remplit complètement, par exemple par une extrémité grâce à des orifices 14 réalisés dans un des obturateurs 7, l'espace annulaire compris entre la conduite 1 et l'enveloppe 3 avec ledit matériau 4 à changement de phase liquéfié et surchauffé au-dessus de sa température de fusion T₀, et ce jusqu'à ce que les éléments de matrice 2 en soient complètement imprégnés. Pour cela, on peut incliner ladite conduite afin de remplir ledit matériau 4 à changement de phase par la partie inférieure de l'espace annulaire tel que représenté sur la figure 4A, ce qui permet de chasser l'air par des évents 15 disposés dans l'obturateur opposé 7 à celui permettant le remplissage (il peur être effectué également le vide avant ledit remplissage) ;
- dans le cas où des entretoises 9 et des sangles 17 de maintien ont été préalablement disposées, on remplit l'espace annulaire avec ledit matériau liquéfié 4 sous pression pour déformer l'enveloppe extérieure 3 entre lesdites sangles 17; la déformée recherchée correspondant à l'augmentation de volume, ou survolume, engendrée par la dilatation thermique du matériau 4 liquide à la température de remplissage, comme représenté sur la figure 4B, et par rapport à son volume à l'état solide
- on refroidit l'ensemble, et après refroidissement et solidification du matériau 4, celui ci reprend sensiblement son volume initial : si le remplissage a été effectué sous pression comme indiqué précédemment l'enveloppe extérieure sera alors sensiblement droite comme indiqué sur la figure 4C, ce qui permettra éventuellement d'enlever lesdites sangles 17 ;

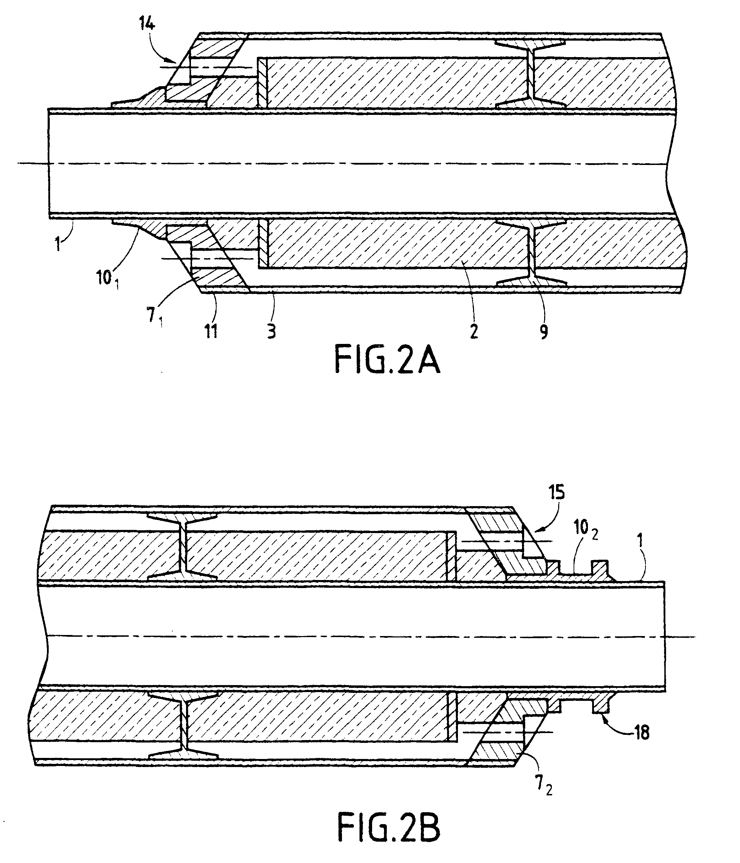

Les corps des obturateurs 7 sont fermés, et ceux des entretoises 9 sont de préférence ajourées pour permettre le remplissage du matériau à changement de phase ; ces obturateurs et entretoises sont réalisés en matière préférentiellement peu conductrice de la chaleur, non métallique. Comme indiqué sur les figures 2A et 2B, lesdits obturateurs peuvent également comporter une bague intérieure 10 de la même matière de celle de la conduite 1 et une bague extérieure 11 de la même matière que celle du tube extérieur 3 : ces deux bagues éventuelles sont fixées sur le corps de l'obturateur de manière rigide et étanche ; celle fixée sur la conduite 1 peut comporter une collerette 10 d'aide à la manutention.

Les entretoises 9 sont nécessaires dans le cas où la tenue mécanique de la partie rigide 2₂ du matériau à changement de phase ne serait pas suffisante pour supporter la ou les conduites 1 ; de plus de telles entretoises 9 assurent le centrage du ou des faisceaux de conduite dans le tube enveloppe extérieure 3.

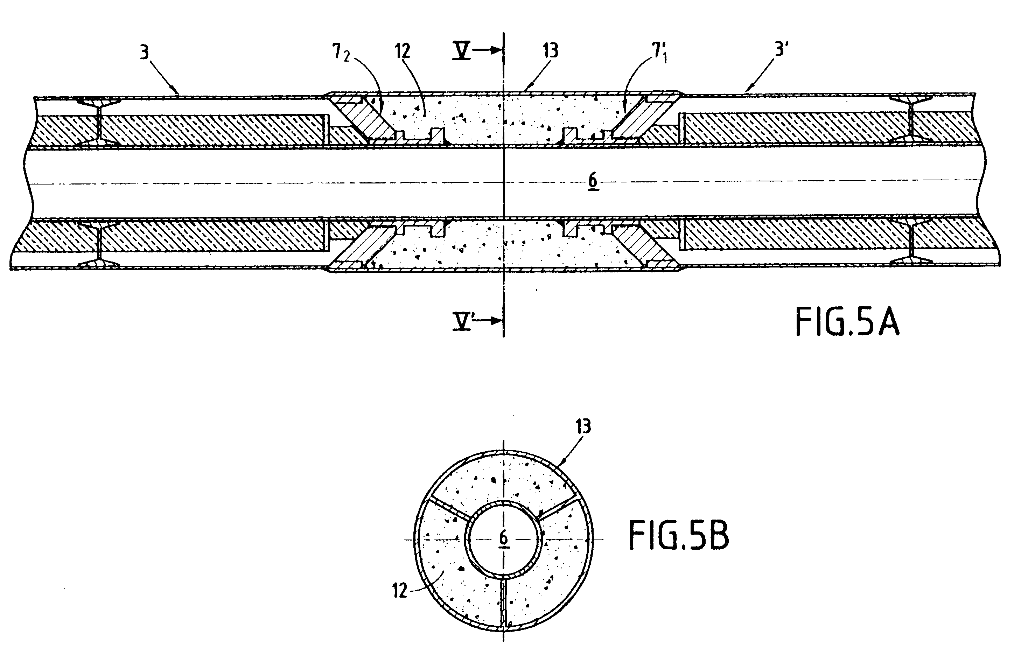

Dans le cas d'une conduite assemblée sur site par soudage ou vissage de tronçons élémentaires préalablement isolés les zones de jonction sont alors dépourvues d'isolation et doivent être traitées sur site : on peut ainsi compléter cette isolation dans cette zone en disposant plusieurs blocs d'imprégnation préfabriqués 12 s'ajustant les uns aux autres, autour de la jonction entre tronçons le tout étant immobilisé par surmoulage par une résine thermoplastique ou thermodurcissable 13 tel que représenté sur les figures 5A et 5B.

### Exemple 2 : faisceau plat d'au moins deux conduites côte à côte.

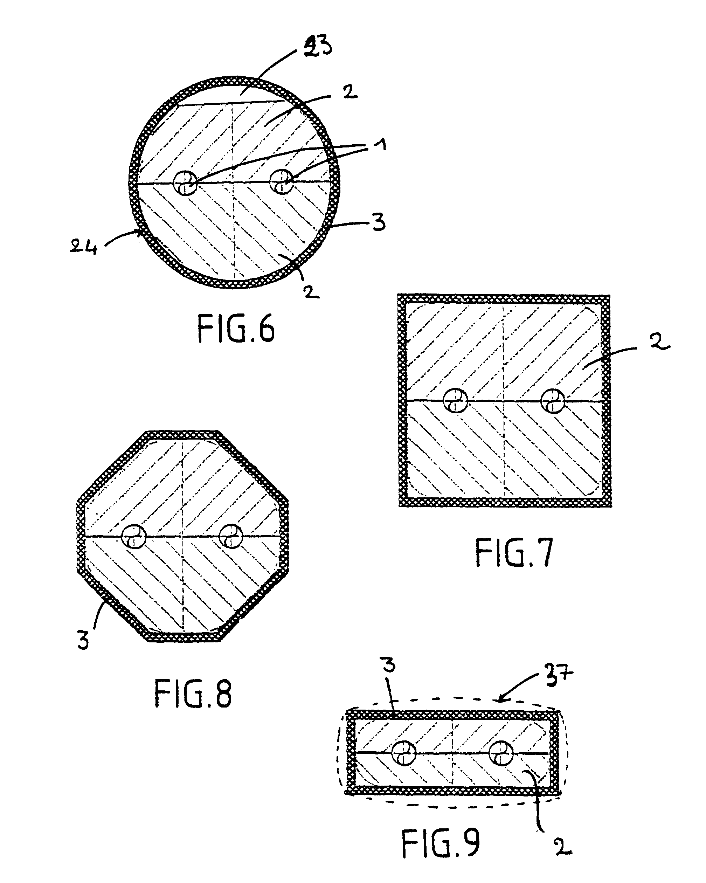

La figure 6 est une vue en coupe d'un dispositif d'isolation thermique de deux conduites sous-marines 1 comportant un revêtement isolant 2 entourant celles ci et une enveloppe de protection 3 confinant l'ensemble. Ledit revêtement isolant 2 est composé comme à l'exemple 1 et le périmètre 24 de la section transversal de l'ensemble est un cercle ; un fluide quasiment incompressible assure le remplissage intégral de l'enveloppe 3 en comblant tous les interstices qui pourraient exister entre lesdites demi coquilles et ladite enveloppe 3 ; celle ci pour ne pas subir des contraintes importantes essentiellement dues aux variations de température, comme expliqué précédemment, comporte alors un canal continu 23 sur toute sa longueur et contre sa paroi intérieure pour faciliter les mouvements du fluide quasi incompressible et maintenir l'ensemble en équipression : l'enveloppe 3 possède également soit à ses extrémités soit en de multiples points répartis sur sa longueur des orifices mettant ledit fluide en contact avec l'extérieur soit directement soit indirectement par l'intermédiaire de membrane souple pour éviter le mélange entre l'eau de mer et ledit fluide quasi incompressible.

La figure 7 est une section transversale du dispositif d'isolation thermique du "bundle" selon l'invention dans lequel le périmètre 24 externe de la section transversale est de forme carrée et protège une isolation d'un revètement isolant 2 composé de paraffine comme décrit à l'exemple 1, de préférence imprégnée dans une matrice absorbante.

La figure 8 est une section d'une variante du dispositif de la figure 7 dans laquelle l'enveloppe 3 est octogonale.

La figure 9 est une section d'une variante du dispositif de la figure 7 dans laquelle l'enveloppe 3 est rectangulaire et de forme aplatie. Sous l'effet des variations de température, l'expansion du revêtement isolant 2 est contenue dans la déformation de l'enveloppe 3 qui prend la forme du profil de la courbe 37.

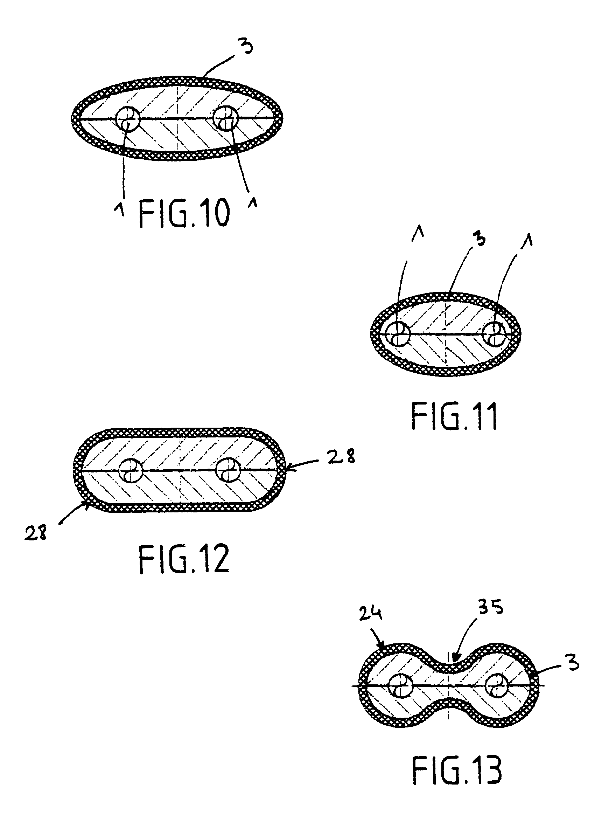

La figure 10 est une section d'une variante de la figure 7 dans laquelle l'enveloppe 3 est de forme ovale dont le rapport de longueur du grand axe celle du sur petit axe est égal à 3/ 1.

La figure 11 est une section d'une variante de la figure 7 dans laquelle l'enveloppe 3 est un ovale dont le rapport du grand axe sur le petit axe est égal à 2/1.

La figure 12 est une section d'une variante de la figure 7 dans laquelle l'enveloppe 3 est de forme rectangulaire aplatie dont les petits cotés 28 sont bombés ou arrondis.

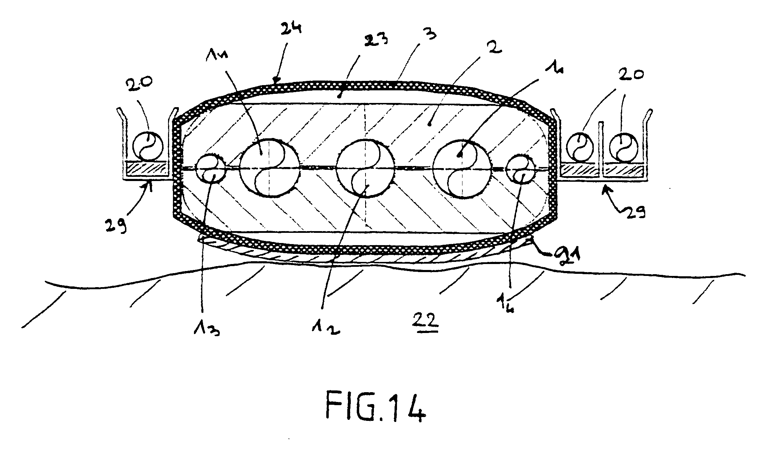

La figure 14 est une section d'une variante de la figure 7 dans laquelle le périmètre 24 de la section transversale de l'enveloppe 3 comporte des points d'inflexion, donc des contre-courbures 5 concaves augmentant la capacité d'expansion.

La figure 14 est une section d'un dispositif d'isolation thermique selon l'invention dont l'enveloppe 3 contient deux conduites 1₁ de production d'effluents pétroliers, une conduite centrale d'injection d'eau 1₂ ainsi que deux conduites de réchauffage de l'ensemble, la conduite 1₃ servant par exemple à envoyer un fluide chaud depuis le support de surface, la conduite 1₄ servant au retour ; une liaison entre les conduites 1₃ et 1₄ existant à la seconde extrémité immergée du faisceau de conduites. Ces conduites 1 sont entourées d'un revêtement isolant rempli d'un fluide quasi-incompressible tel que de la paraffine comme décrit à l'exemple 1. Le faisceau de conduites ou "bundle" est équipé sur ses côtés de goulottes 29 pouvant recevoir des ombilicaux 20, lesdites goulottes étant représentées simple sur la gauche et double sur la droite de la figure 14.

Le dispositif d'isolation thermique selon l'invention comporte à sa partie inférieure une semelle ou plaque d'usure 11 disposée sur une partie du périmètre 24 externe de la section transversal de l'enveloppe de protection 3, et de préférence au moins suivant un des grands cotés de ladite section transversale permettant alors d'éviter tout endommagement de l'enveloppe 3 de confinement lors de l'opération de remorquage et d'installation sur le site : l'ensemble reposant sur le fond de la mer 22, seule la plaque d'usure 21 frotte contre celui ci.

Ladite semelle ou plaque d'usure 21 peut être réalisée en matériau thermoplastique de densité 1 done ne modifiant pas la flottabilité de l'ensemble lors du remorquage ni même durant la vie du faisceau de conduites sur le site.

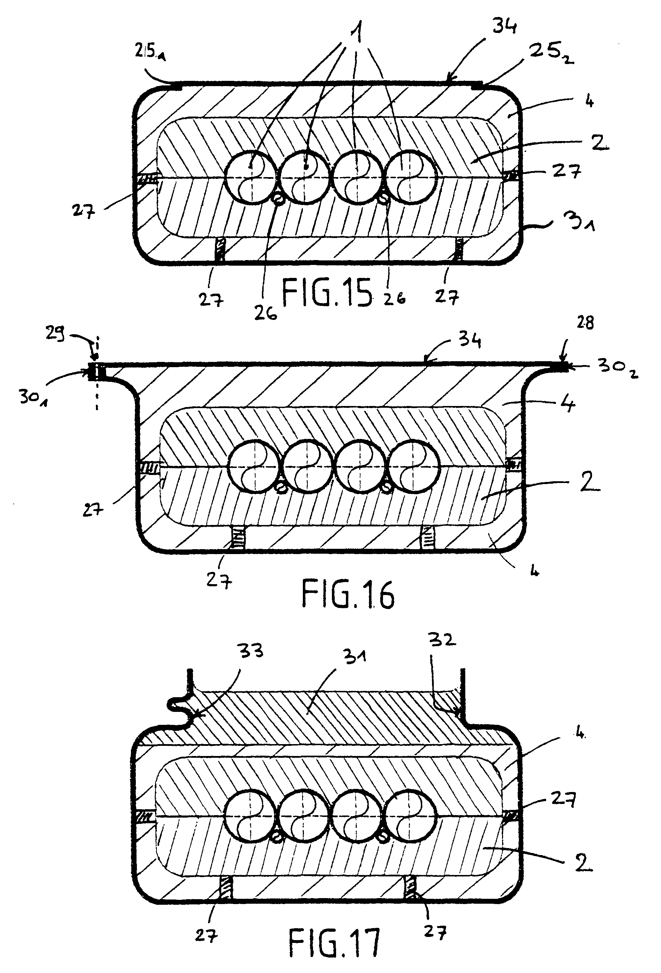

La figure 15 est une section d'un "bundle" dont l'enveloppe 3 de protection comporte une partie inférieure 3₁ en forme de "U" ouvert vers le haut en position opérationnelle, dans lequel sont disposées lesdites conduites 1, le revêtement isolant 2 et le fluide incompressible 4, ladite partie inférieure 3₁ étant fermée par un couvercle 34 assemblé sur celle ci pour constituer l'ensemble de l'enveloppe de protection 3 ; celle ci est représentée de forme sensiblement rectangulaire et réalisée par exemple à partir d'une tôle métallique formée et équipée d'un couvercle 34 assemblé par soudage en (25₁, 25₂)sur ladite enveloppe. Le "bundle" contient des conduites 1 et des lignes de réchauffage électriques 26, l'ensemble étant contenu dans un revêtement 2 supporté par des cales 27, disposées dans la partie inférieure de l'enveloppe 3 ; ledit revêtement 2 étant constitué, soit d'une matrice absorbante imprégnée de paraffine, soit de mousse syntactique ou de tout autre produit d'isolation résistant à la pression ; l'espace compris entre l'enveloppe 3 et le revêtement isolant 2 étant rempli de fluide quasiment incompressible 4, tel que de la paraffine, assurant le remplissage intégral du volume interne de l'enveloppe 3 laquelle dans ce mode de réalisation n'épouse donc pas la forme du revêtement isolant 2.

La figure 16 est une variante de la figure 15 dans laquelle l'enveloppe 3 et le couvercle 34 présentent un recouvrement en forme de lèvre 28 située à l'extérieur de la section principale du "bundle" ce qui permet d'effectuer un assemblage,
- soit, comme représenté sur la partie gauche de la figure, par boulonnage ou rivetage à travers des trous 29 régulièrement espacés. associé à la mise en place d'un joint élastomère 30₁ ou encore par simple collage entre les tôles,
- soit encore par soudage continu à la molette dans la zone 30₂ comme représenté sur la partie droite de la figure ; ledit soudage à la molette étant connu de l'homme de l'art dans le domaine de la chaudronnerie, ne sera pas décrit ici.

Ainsi, dans le cas d'assemblage mécanique, de collage ou de la combinaison des deux, l'enveloppe 3 peut être réalisée en tous matériaux tels que des métaux, des thermoplastiques, des thermodurcissables ou encore des matériaux composites.

La figure 17 est une variante de la figure 15 dans laquelle le couvercle est remplacé par une couche 31 de matériau souple tel que thermoplastique, thermodurcissable ou réticulable, par exemple en élastomère, lequel matériau ferme l'ouverture supérieure de la partie inférieure 3₁ en forme de "U" de l'enveloppe 3 et est coulé en place après installation complète de tous les composants du "bundle", un revêtement isolant 2 comprenant un fluide quasiment incompressible 4, ledit revétement isolant 2 étant entouré de fluide incompressible de remplissage 4 dont le niveau sera alors ajusté de manière à laisser suffisamment de place pour assurer à la couche 31 une épaisseur suffisante, par exemple 1 cm, permettant ainsi une adhérence suffisante à la paroi de l'enveloppe 3. La surface de contact est représentée sur la partie droite de la figure sous la forme d'un angle droit 32, sur la partie gauche un formage 33 en S de la tôle 3 augmente les surfaces de contact ainsi que les zones soumises à cisaillement, lequel cisaillement est en général préférable à l'arrachement dans les collages.

## Revendications

1. Ensemble comprenant au moins une conduite sous-marine (1) destinée à être posée sur le fond à grande profondeur et un dispositif d'isolation thermique comportant un revêtement isolant entourant ladite conduite sous-marine (1) et une enveloppe de protection (3), ledit revêtement isolant comprenant un matériau quasi incompressible (4) à changement de phase liquide-solide **caractérisé en ce que** ledit matériau à changement de phase liquide solide présente une température de fusion T₀ supérieure à celle T₂ du milieu sous-marin environnant la conduite en opération et, inférieure à celle T₁ des effluents circulant dans ladite conduite en opération, laquelle enveloppe de protection (3) est résistante et déformable, capable de suivre les variations de volume dudit revêtement isolant lors dudit changement de phase, et assure un confinement autour dudit revêtement isolant.

2. Ensemble selon la revendication 1 **caractérisé en ce que** ledit revêtement isolant comprend une matrice (2) absorbante entourant ladite conduite (1), de préférence au plus près de sa surface extérieure, et imprégnée dudit matériau (4).

3. Ensemble suivant la revendication 1 ou 2 **caractérisé en ce que** l'enveloppe de protection (3), s'appuyant s.ur le matériau (4) solidifié et rigide au moins à sa périphérie, est apte à supporter le poids de la conduite (1) et les frottements lors de la pose de celle ci depuis la surface.

4. Ensemble selon l'une quelconque des revendications 1 à 3 **caractérisé en ce que** l'enveloppe de protection (3) est déformable pour suivre les variations de volume du revêtement isolant qu'elle confine sous l'effet de la pression hydrostatique et lors des variations de température.

5. Ensemble selon l'une quelconque des revendications 1 à 4 **caractérisé en ce que** l'enveloppe de protection (3) comporte au moins un évent perméable au gaz pouvant diffuser à travers ladite conduite sous-marine (1) et généré par les effluents qui y circulent.

6. Ensemble selon l'une quelconque des revendications 2 à 5 **caractérisé en ce que** la matrice (2) est constituée d'un matériau léger cellulaire ou fibreux et ledit matériau quasi-incompressible (4) qui l'imprègne a une température de fusion (T₀) comprise entre 20 et 80°C.

7. Ensemble selon l'une quelconque des revendications 1 à 6 **caractérisé en ce que** ledit matériau (4) a une conductivité thermique inférieure à 0,3 Watt/mètre/degré Celsius en phase solide et une enthalpie de fusion supérieure à 50 kilojoule/kilogramme.

8. Ensemble selon l'une quelconque des revendications 2 à 7 **caractérisé en ce que** ladite matrice (2) n'occupe qu'une partie du volume de l'espace annulaire délimitée par ladite enveloppe de protection (3) et ladite conduite (1).

9. Ensemble selon l'une quelconque des revendications 1 à 8 **caractérisé en ce qu'**il comporte des entretoises (9) régulièrement espacées le long de la conduite (1) sur laquelle elles s'appuient et supportant l'enveloppe de protection (3).

10. Ensemble selon l'une quelconque des revendications 1 à 9 **caractérisé en ce que** l'enveloppe de protection (3) est en matériau thermoplastique.

11. Ensemble selon l'une quelconque des revendications 1 à 10 **caractérisé en ce que** ledit matériau (4) quasi-incompressible est constitué, à au moins 90 %, de composés chimiques de la famille des alcanes, de préférence une paraffine comprenant une chaîne hydrocarbonée d'au moins 10 atomes de carbone.

12. Ensemble selon la revendication 11 **caractérisé en ce que** ledit matériau quasi-incompressible (4) comprend une paraffine comprenant une chaîne hydrocarbonée d'au moins 14 atomes de carbone.

13. Ensemble selon l'une des revendication 1 à 12 **caractérisé en ce que** le périmètre (24) externe de la section transversale de ladite enveloppe de protection (3) est une courbe fermée dont le rapport du carré de la longueur sur la surface qu'elle délimite est au moins égal à 13.

14. Ensemble selon la revendication 12 **caractérisé en ce que** la forme extérieure de la section transversale de ladite enveloppe de protection (3) est un ovale.

15. Ensemble suivant la revendication 14 **caractérisé en ce que** le rapport de longueur du grand axe sur celle du petit axe de l'ovale est au moins de 2.

16. Ensemble selon la revendication 13 **caractérisé en ce que** la forme extérieure de la section transversale de ladite enveloppe de protection (3) est un rectangle.

17. Ensemble selon l'une quelconque des revendications 13 à 16 **caractérisé en ce qu'**il comporte au moins deux conduites (1) disposées suivant un même plan et la section transversale de ladite enveloppe (3) est de forme allongée dans la même direction que ce plan.

18. Ensemble selon l'une quelconque des revendications 13 à 16 **caractérisé en ce que** le périmètre (24) de la section transversale de ladite enveloppe (3) comporte des contre courbures concaves (35).

19. Ensemble selon l'une quelconque des revendications 13 à 18 **caractérisé en ce qu'**il comporte une plaque d'usure (21) disposée sur une partie dudit périmètre (24) extérieur de l'enveloppe (3).

20. Ensemble suivant la revendication 19 et selon l'une quelconque des revendications 14 à 17 **caractérisé en ce que** ladite plaque d'usure (21) est disposée suivant l'un des grands cotés de la section transversale de ladite enveloppe (3).

21. Ensemble selon l'une quelconque des revendications 13 à 20 **caractérisé en ce que** le rapport du carré de la longueur du périmètre (24) extérieur de la section transversale de ladite enveloppe de protection (3) sur la surface que délimite ledit périmètre est au moins égale à 16.

22. Ensemble selon l'une quelconque des revendications 13 à 21 **caractérisé en ce que** l'enveloppe de protection (3) comporte une partie inférieure (3₁) en forme de "U" dans lequel sont disposées lesdites conduites (1) et un couvercle (34) assemblés sur cette enveloppe (3).

23. Ensemble suivant la revendication 22 **caractérisé en ce que** ledit couvercle (34) est soudé à la molette.

24. Ensemble selon l'une quelconque des revendications 13 à 23 **caractérisé en ce que** l'enveloppe de protection (3) comporte une partie inférieure (3₁) en forme de "U" dans laquelle sont disposées lesdites conduites (1) et une ouverture supérieure fermée par une couche (31) de matériau souple coulé après installation de tous les composants internes.

25. Ensemble selon l'une quelconque des revendications 13 à 24 **caractérisé en ce que** l'enveloppe (3) comporte des cales (27) supportant le revêtement isolant (2), l'espace compris entre l'enveloppe (3) et ledit revêtement (2) étant rempli d'un fluide quasiment incompressible (4).

26. Procédé d'isolation thermique d'au moins une conduite sous marine (1) destinée à être posée sur le fond à grande profondeur, utilisant un revêtement isolant entourant celle ci et une enveloppe de protection (3), **caractérisé en ce que** :
- on entoure ladite conduite (1), de préférence directement avec un revêtement isolant (2) comprenant un matériau quasi incompressible (4) et à changement de phase liquide-solide à une température de fusion (T₀) donnée, ledit matériau quasi-incompressible étant de préférence imprégné dans une matrice absorbante, et on confine l'ensemble dans l'enveloppe de protection (3) qui doit être résistante et déformable, capable de suivre les variations de volume dudit revêtement isolant lors dudit changement de phase,
- on fait circuler dans ladite conduite (1) des effluents chauds (6) à une température T₁ supérieure à la température de fusion T₀ dudit matériau (4) alors que la température T₂ du milieu sous-marin ambiant extérieur est inférieure à T₀, le matériau à changement de phase (4) étant alors liquide, de préférence dans une partie de la matrice d'imprégnation (2₁) depuis la conduite (1) jusqu'à une limite d'équilibre (19) d'échange thermique entre la conduite (1) et l'enveloppe (3), au-delà de cette limite (19) le matériau étant solide,
- quand on arrête la circulation des effluents (6) dans la conduite (1) on maintient la température de ces effluents (6) au-dessus d'une température T₃ donnée pendant une durée prédéterminée grâce au transfert calorifique apporté par la chaleur latente dudit matériau (4) dont la partie liquide (4₁) se solidifie progressivement en se refroidissant.

27. Procédé d'isolation thermique suivant la revendication 26 **caractérisé en ce que** :
- on fixe un obturateur d'une manière continue et étanche un obturateur (7₂) à l'extrémité de la paroi extérieure de conduite (1) à isoler;
- on monte sur cette partie de conduite (1) des éléments de la matrice (2) absorbante qui entourent celle-ci complètement et uniformément,
- on enfile autour de ces éléments de matrice (2) l'enveloppe extérieure de protection (3) que l'on solidarise à son extrémité à l'obturateur (7₂)
- on positionne à l'autre extrémité de l'enveloppe de protection (3) un deuxième obturateur (7₁) que l'on fixe sur cette enveloppe et sur la conduite (1),
- on remplit complètement, par une extrémité, l'espace annulaire compris entre la conduite (1) et l'enveloppe (3) avec ledit matériau (4) à changement de phase, liquéfié et surchauffé au-dessus de sa température de fusion T₀ et jusqu'à ce que les éléments de matrice (2) en soient complètement imprégnés,
- on refroidit l'ensemble.

28. Procédé d'isolation thermique suivant la revendication 27 **caractérisé en ce que** :
- on intercale entre des éléments de matrice (2) absorbante des entretoises (9) régulièrement espacées le :long de la conduite (1) sur laquelle elles s'appuient,
- lorsque l'ensemble des éléments de l'enveloppe de protection (3) ont été mis en place et fixés pour constituer l'enveloppe de confinement, on met en place des sangles (17) de maintien à l'aplomb desdites entretoises (9),
- on remplit alors l'espace annulaire avec ledit matériau liquéfié (4) sous pression pour déformer l'enveloppe extérieure (3) entre lesdites sangles (17), laquelle déformation correspondant à l'augmentation de volume engendrée par la dilatation thermique du matériau (4) liquide à la température de remplissage.

## Patentansprüche

1. Einheit, umfassend mindestens eine Unterwasserleitung (1), die dazu bestimmt ist, am Boden in großer Tiefe angeordnet zu werden, und eine Vorrichtung zum thermischen Isolieren, umfassend eine lsolierverkleidung, die die Unterwasserleitung (1) umgibt, und eine Schutzhülle (3), wobei die lsolierverkleidung ein gleichsam nicht zusammendrückbares Material (4) mit Flüssig-Fest-Phasenübergang umfasst, **dadurch gekennzeichnet, dass** das Material mit Flüssig-Fest-Phasenübergang eine Schmelztemperatur T₀ aufweist, die größer als jene T₂ des die in Betrieb befindliche Leitung umgebenden Unterwassermediums und geringer als jene T₁ der in der in Betrieb befindlichen Leitung zirkulierenden Abwässer ist, wobei die Schutzhülle (3) widerstandsfähig und verformbar und in der Lage ist, den Volumenänderungen der lsolierverkleidung beim Phasenübergang zu folgen, und eine Einschließung um die lsolierverkleidung sicher stellt.

2. Einheit nach Anspruch 1, **dadurch gekennzeichnet, dass** die lsolierverkleidung eine absorbierende Matrix (2) umfasst, die die Leitung (1) vorzugsweise möglichst nahe ihrer Außenfläche umgibt und mit dem Material (4) durchtränkt ist.

3. Einheit nach Anspruch 1 oder 2, **dadurch gekennzeichnet, dass** die Schutzhülle (3), die auf dem verfestigten und starren Material (4) zumindest an seiner Peripherie aufliegt, das Gewicht der Leitung (1) und die Reibungen bei der Verlegung derselben von der Oberfläche aufnehmen kann.

4. Einheit nach einem der Ansprüche 1 bis 3, **dadurch gekennzeichnet, dass** die Schutzhülle (3) verformbar ist, um den Volumenänderungen der lsolierverkleidung, die sie isoliert, unter der Wirkung des hydrostatischen Drucks und bei Temperaturschwankungen zu folgen.

5. Einheit nach einem der Ansprüche 1 bis 4, **dadurch gekennzeichnet, dass** die Schutzhülle (3) mindestens eine Öffnung umfasst, die für das Gas durchlässig ist, das durch die Unterwasserleitung (1) diffundieren kann und von den darin zirkulierenden Abwässern erzeugt wird.

6. Einheit nach einem der Ansprüche 2 bis 5, **dadurch gekennzeichnet, dass** die Matrix (2) von einem leichten zellularen oder faserigen Material gebildet ist, und das gleichsam nicht zusammendrückbare Material (4), das sie durchtränkt, eine Schmelztemperatur (T₀) zwischen 20 und 80 °C aufweist.

7. Einheit nach einem der Ansprüche 1 bis 6, **dadurch gekennzeichnet, dass** das Material (4) eine Wärmeleitfähigkeit unter 0,3 Watt/Meter/Grad Celsius in der Festphase und eine Schmelzenthalpie über 50 Kilojoule/Kilogramm aufweist.

8. Einheit nach einem der Ansprüche 2 bis 7, **dadurch gekennzeichnet, dass** die Matrix (2) nur einen Teil des Volumens des ringförmigen Raums einnimmt, der von der Schutzhülle (3) und der Leitung (1) begrenzt ist.

9. Einheit nach einem der Ansprüche 1 bis 8, **dadurch gekennzeichnet, dass** sie Querstreben (9) umfasst, die in regelmäßigen Abständen entlang der Leitung (1), auf die sie sich aufstützten, angeordnet sind und die Schutzhülle (3) tragen.

10. Einheit nach einem der Ansprüche 1 bis 9, **dadurch gekennzeichnet, dass** die Schutzhülle (3) aus einem Thermoplast ist.

11. Einheit nach einem der Ansprüche 1 bis 10, **dadurch gekennzeichnet, dass** das gleichsam nicht zusammendrückbare Material (4) zu zumindest 90 % aus chemischen Verbindungen aus der Familie der Alkane, vorzugsweise einem Paraffin, gebildet ist, das eine Kohlenwasserstoffkette mit mindestens 10 Kohlenstoffatomen umfasst.

12. Einheit nach Anspruch 11, **dadurch gekennzeichnet, dass** das gleichsam nicht zusammendrückbare Material (4) ein Paraffin umfasst, das eine Kohlenwasserstoffkette mit mindestens 14 Kohlenstoffatomen umfasst.

13. Einheit nach einem der Ansprüche 1 bis 12, **dadurch gekennzeichnet, dass** der äußere Umfang (24) des Querschnitts der Schutzhülle (3) eine geschlossene Kurve ist, deren Verhältnis des Quadrats der Länge zu der Fläche, die sie begrenzt, mindestens gleich 13 ist.

14. Einheit nach Anspruch 12, **dadurch gekennzeichnet, dass** die äußere Form des Querschnitts der Schutzhülle (3) ein Oval ist.

15. Einheit nach Anspruch 14, **dadurch gekennzeichnet, dass** das Längenverhältnis der großen Achse zu jener der kleinen Achse des Ovals mindestens gleich 2 ist.

16. Einheit nach Anspruch 13, **dadurch gekennzeichnet, dass** die äußere Form des Querschnitts der Schutzhülle (3) ein Rechteck ist.

17. Einheit nach einem der Ansprüche 13 bis 16, **dadurch gekennzeichnet, dass** sie mindestens zwei Leitungen (1) umfasst, die entlang einer selben Ebene angeordnet sind, und dass der Querschnitt der Hülle (3) längliche Form in dieselbe Richtung wie diese Ebene hat.

18. Einheit nach einem der Ansprüche 13 bis 16, **dadurch gekennzeichnet, dass** der Umfang (24) des Querschnitts der Hülle (3) konkave Gegenkrümmungen (35) umfasst.

19. Einheit nach einem der Ansprüche 13 bis 18, **dadurch gekennzeichnet, dass** sie eine Verschleißplatte (21) umfasst, die auf einem Teil des äußeren Umfangs (24) der Hülle (3) angeordnet ist.

20. Einheit nach Anspruch 19 und einem der Ansprüche 14 bis 17, **dadurch gekennzeichnet, dass** die Verschleißplatte (21) entlang einer der großen Seiten des Querschnitts der Hülle (3) angeordnet ist.

21. Einheit nach einem der Ansprüche 13 bis 20, **dadurch gekennzeichnet, dass** das Verhältnis des Quadrats der Länge des äußeren Umfangs (24) des Querschnitts der Schutzhülle (3) zur Fläche, die der Umfang begrenzt, zumindest gleich 16 ist.

22. Einheit nach einem der Ansprüche 13 bis 21, **dadurch gekennzeichnet, dass** die Schutzhülle (3) einen unteren Teil (31) in Form eines "U", in dem die Leitungen (1) angeordnet sind, und einen Deckel (34) umfasst, die auf dieser Hülle (3) befestigt sind.

23. Einheit nach Anspruch 22, **dadurch gekennzeichnet, dass** der Deckel (34) an das Rändelrad geschweißt ist.

24. Einheit nach einem der Ansprüche 13 bis 23, **dadurch gekennzeichnet, dass** die Schutzhülle (3) einen unteren Teil (3₁) in Form eines "U", in dem die Leitungen (1) angeordnet sind, und eine obere Öffnung umfasst, die durch eine Schicht (31) eines weichen Gussmaterials nach Einrichtung aller inneren Bauteile verschlossen wird.

25. Einheit nach einem der Ansprüche 13 bis 24, **dadurch gekennzeichnet, dass** die Hülle (3) Keile (27) umfasst, die die lsolierverkleidung (2) tragen, wobei der Raum zwischen der Hülle (3) und der Verkleidung (2) mit einem gleichsam nicht zusammendrückbaren Fluid (4) gefüllt ist.

26. Verfahren zum thermischen Isolieren von mindestens einer Unterwasserleitung (1), die dazu bestimmt ist, am Boden in großer Tiefe verlegt zu werden, wobei eine diese umgebende lsolierverkleidung und eine Schutzhülle (3) verwendet werden, **dadurch gekennzeichnet, dass**:
- die Leitung (1) vorzugsweise direkt mit einer lsolierverkleidung (2) umgeben ist, die ein gleichsam nicht zusammendrückbares Material (4) mit einem Flüssig-Fest-Phasenübergang bei einer gegebenen Schmelztemperatur (T₀) umfasst, wobei das gleichsam nicht zusammendrückbare Material vorzugsweise eine absorbierende Matrix durchtränkt, und die Einheit in der Schutzhülle (3) eingeschlossen wird, die widerstandsfähig und verformbar und in der Lage sein muss, den Volumenänderungen der lsolierverkleidung beim Phasenübergang zu folgen,
- in der Leitung (1) warme Abwässer (6) bei einer Temperatur T₁ größer als die Schmelztemperatur T₀ des Materials (4) zirkulieren, während die Temperatur T₂ des äußeren umgebenden Unterwassermediums geringer als T₀ ist, wobei das Material mit Phasenübergang (4) nun vorzugsweise in einem Teil der lmprägniermatrix (2₁) von der Leitung (1) bis zu einer Ausgleichsgrenze (19) des Wärmeaustauschs zwischen der Leitung (1) und der Hülle (3) flüssig und über diese Grenze (19) hinaus fest ist,
- wenn die Zirkulation der Abwässer (6) in der Leitung (1) angehalten wird, die Temperatur der Abwässer (6) über einer gegebenen Temperatur T₃ während einer vorbestimmten Dauer dank der Wärmeübertragung durch die latente Wärme des Materials (4) gehalten wird, dessen flüssiger Teil (4₁) sich nach und nach verfestigt, indem er sich abkühlt.

27. Verfahren zum thermischen Isolieren nach Anspruch 26, **dadurch gekennzeichnet, dass**:
- kontinuierlich und dicht eine Verschlussvorrichtung (7₂) am Ende der zu isolierenden äußeren Leitungswand (1) befestigt wird;
- auf diesem Leitungsteil (1) Elemente der absorbierenden Matrix (2) befestigt werden, die diese völlig und einheitlich umgeben;
- um diese Matrixelemente (2) die äußere Schutzhülle (3) geschoben wird, die an ihrem Ende mit der Verschlussvorrichtung (7₂) verbunden wird;
- am anderen Ende der Schutzhülle (3) eine zweite Verschlussvorrichtung (7₁) angeordnet wird, die auf dieser Hülle und der Leitung (1) befestigt wird,
- der ringförmige Raum zwischen der Leitung (1) und der Hülle (3) zur Gänze über ein Ende mit dem Material (4) mit Phasenübergang gefüllt wird, das verflüssigt und über seine Schmelztemperatur T₀ hinaus erhitzt wird, bis die Matrixelemente (2) völlig durchtränkt sind;
- die Einheit gekühlt wird.

28. Verfahren zum thermischen Isolieren nach Anspruch 27, **dadurch gekennzeichnet, dass**:
- zwischen den Elementen der absorbierenden Matrix (2) Querstreben (9) angeordnet werden, die in regelmäßigen Abständen entlang der Leitung (1), auf der sie sich abstützen, verteilt sind,
- wenn die Einheit der Elemente der Schutzhülle (3) angeordnet und befestigt wurde, um die Einschließungshülle zu bilden, Haltegurte (17) senkrecht auf die Querstreben (9) angeordnet werden,
- nun der ringförmige Raum mit dem verflüssigten Material (4) unter Druck gefüllt wird, um die äußere Hülle (3) zwischen den Gurten (17) zu verformen, wobei diese Verformung der Volumenerhöhung entspricht, die durch die Wärmedehnung des flüssigen Materials (4) bei der Befüllungstemperatur hervorgerufen wird.

## Claims

1. A set comprising at least one underwater pipe (1) intended to be laid on the sea bed at great depth and a device for the heat insulation comprising an insulating coating surrounding the said underwater pipe (1) and a protective envelope (3), the said insulating coating comprising a virtually incompressible liquid/solid phase change material (4) **characterized in that** the said liquid/solid phase change material displays a melting temperature T₀ higher than that T₂ of the underwater medium surrounding the pipe in operation and less than that T₁ of the effluents circulating in said pipe in operation, which protective envelope (3) is resistant and deformable, able to follow the variations in volume of the said insolating coating when phase change occurs, and ensures a containment about said insulating coating.

2. A set according to Claim 1, **characterized in that** said insulating coating comprises an absorbent matrix (2) surrounding said pipe (1), preferably nearest its outer surface, and impregnated with said material (4).

3. A set according to Claim 1 or 2, **characterized in that** the protective envelope (3), abutting on the material (4) which is solidified and rigid at least on its periphery, is adapted to support the weight of the pipe (1) and the frictions when the latter is laid from the surface.

4. A set according to any one of Claims 1 to 3, **characterized in that** the protective envelope (3) is deformable in order to follow the variations in volume of the insulating coating that it contains under the effect of the hydrostatic pressure and upon variations in temperature.

5. A set according to any one of Claims 1 to 4, **characterized in that** the protective envelope (3) comprises at least one vent permeable to the gas that may diffuse though said underwater pipe (1) and generated by the effluents which circulate therein.

6. A set according to any one of Claims 2 to 5, **characterized in that** the matrix (2) is constituted by a light, cellular or fibrous material and said virtually incompressible material (4) which impregnates it has a melting temperature (T₀) included between 20 and 80°C.

7. A set according to any one of Claims 1 to 6, **characterized in that** said material (4) has a thermal conductivity less than 0.3 Watt/meter/degree Celsius in solid phase and an enthalpy of fusion greater than 50 kilojoule/kilogram.

8. A set according to any one of Claims 2 to 7, **characterized in that** said matrix (2) occupies only a part of the volume of the annular space defined by said protective envelope (3) and said pipe (1).

9. A set according to any one of Claims 1 to 8, **characterized in that** it comprises distance pieces (9) regularly spaced apart along the pipe (1) on which they abut and supporting the protective envelope (3).

10. A set according to any one of Claims 1 to 9, **characterized in that** the protective envelope (3) is made of thermoplastics material.

11. A set according to any one of Claims 1 to 10, **characterized in that** said virtually incompressible material (4) is constituted, to at least 90%, of chemical compounds of the family of alkanes, preferably a paraffin comprising a hydrocarbon chain with at least 10 carbon atoms.

12. A set according to Claim 11, **characterized in that** said virtually incompressible material (4) comprises a paraffin comprising a hydrocarbon chain with at least 14 carbon atoms.

13. A set according to one of Claims 1 to 12, **characterized in that** the outer perimeter (24) of the transverse section of said protective envelope (3) is a closed curve of which the ratio of the square of the length over the surface that it defines is at least equal to 13.

14. A set according to Claim 12, **characterized in that** the outer shape of the transverse section of said protective envelope (3) is an oval.

15. A set according to Claim 14, **characterized in that** the ratio of length of the large axis over that of the small axis of the oval is at least 2.

16. A set according to Claim 13, **characterized in that** the outer shape of the transverse section of said protective envelope (3) is a rectangle.

17. A set according to any one of Claims 13 to 16, **characterized in that** it comprises at least two pipes (1) disposed along the same plane and the transverse section of said envelope (3) is of shape elongated in the same direction as this plane.

18. A set according to any one of Claims 13 to 16, **characterized in that** the perimeter (24) of the transverse section of said envelope (3) comprises concave reversed curvatures (35).

19. A set according to any one of Claims 13 to 18, **characterized in that** it comprises a wear plate (21) disposed on a part of said outer perimeter (24) of the envelope (3).

20. A set according to Claim 19 and according to any one of Claims 14 to 17, **characterized in that** said wear plate (21) is disposed along one of the large sides of the transverse section of said envelope (3).

21. A set according to any one of Claims 13 to 20, **characterized in that** the ratio of the square of the length of the outer perimeter (24) of the transverse section of said protective envelope (3) on the surface that said perimeter defines is at least equal to 16.

22. A set according to any one of Claims 13 to 21, **characterized in that** the protective envelope (3) comprises a lower "U"-shaped part (3₁) in which are disposed said pipes (1) and a lid (34) assembled on this envelope (3).

23. A set according to Claim 22, **characterized in that** said lid (34) is seam-welded.

24. A set according to any one of Claims 13 to 23, **characterized in that** the protective envelope (3) comprises a lower "U"-shaped part (3₁) in which are disposed said pipes (1) and an upper opening closed by a layer (31) of supple material cast after installation of all the internal components.

25. A set according to any one of Claims 13 to 24, **characterized in that** the envelope (3) comprises shims (27) supporting the insulating coating (2), the space included between the envelope (3) and said coating (2) being filled with a virtually incompressible fluid (4).

26. Process for the heat insulation of at least one underwater pipe (1) intended to be laid on the sea-bed at great depth, using an insulating coating surrounding said pipe and a protective envelope (3), **characterized in that**:
- said pipe (1) is surrounded, preferably directly, with an insulating coating (2) comprising a virtually incompressible, liquid-solid phase change material (4) with a given melting temperature T₀, said incompressible material preferably being impregnated in an absorbant matrix, and the whole is contained in the protective envelope (3) which must be resistant and deformable,
- there are made to circulate in said pipe (1) hot effluents (6) at a temperature T₁ higher than the melting temperature T₀ of said material (4) while the ambient outside temperature T₂ is less than T₀, the phase change material (4) then being liquefied, preferably in a part of the impregnation matrix (2₁) from the pipe (1) up to a limit of heat exchange equilibrium (19) between the pipe (1) and the envelope (3), beyond this limit (19) the material being solid,
- when the circulation of the effluents (6) in the pipe (1) is stopped, the temperature of these effluents (6) is maintained above a given temperature T₃ for a predetermined duration thanks to the heat transfer brought by the latent heat of solidification of said material (4) of which the liquid part (4₁) solidifies progressively on cooling.

27. Process of heat insulation according to Claim 26, **characterized in that**:
- an obturator (7₂) is fixed in continuous and tight manner at the end of the outer wall of pipe (1) to be insulated;
- there are mounted on this part of pipe (1) elements of the absorbent matrix (2) which surround the latter completely and uniformly,
- there is fitted around these matrix elements (2) the outer protective envelope (3) which is connected at its end to the obturator (7₂),
- there is positioned at the other end of the protective envelope (3) a second obturator (7₁) which is fixed on this envelope and on the pipe (1),
- the annular space included between the pipe (1) and the envelope (3) is completely filled, via one end, with said phase change material (4) liquefied and overheated above its melting temperature T₀ and until the matrix elements (2) are completely impregnated with it,
- the whole is cooled.

28. Process of heat insulation according to Claim 27, **characterized in that**:
- there are interposed between absorbent matrix elements (2), distance pieces (9) regularly spaced along the pipe (1) on which they abut,
- when all the elements of the protective element (3) have been placed in position and fixed to constitute the containment envelope, straps (17) for holding said distance pieces (9) plumb are placed in position,
- the annular space is then filled with said liquefied material (4) under pressure in order to deform the outer envelope (3) between said straps (17), which deformation corresponding to the increase in volume generated by the thermal expansion of the material (4) liquid at filling temperature
